# EUROPEAN PATENT APPLICATION

(11) **EP 4 335 599 A1**
(43) Date of publication of application: **13.03.2024**
(21) Application number: 22195000.9
(22) Date of filing: 12.09.2022
(51) Int. Cl.: B25J 9/16

(54) **ROBOT CELL CALIBRATION**

(71) Applicant: fruitcore robotics GmbH, 78467 Konstanz (DE)
(72) Inventor: RIEGGER, Jens, 78467 Konstanz (DE); FREY, Manuel, 78467 Konstanz (DE)
(74) Representative: Grünecker Patent- und Rechtsanwälte PartG mbB

(57) **Abstract**

The present invention relates to a robot cell (1) with an industrial robot (2), a sensor (12) provided on a movable portion (11) of the industrial robot (2), and a marker (3). The industrial robot (2) is configured to move the movable portion (11) to a calibration position, where the sensor (12) is configured to detect the marker (3). The robot cell (1) further comprises at least two connection ports (14) for the marker (3). The marker (3) is adapted to be connected to either of the connection ports (14).

## Description

The present invention relates to a robot cell with an industrial robot and a marker to calibrate the industrial robot. The present invention also relates to a method for calibrating an industrial robot and a use of a robot cell to facilitate robot calibration.

In modern industrial facilities, industrial robots are used, whose operation has to be carefully controlled to guarantee high yield at desired qualities and to avoid production downtimes.

To meet these requirements, calibration systems are used to maximise robot movement precision. For example, these systems include a stationary provided imaging device to detect markers on a moving portion of the industrial robot (see, for example, EP 3 558 599 B1). However, these systems are relatively expensive, since imaging devices with a high-resolution are required to track the moving portion over a large detection range.

Systems with smaller detection ranges and moderately priced sensors, for example, laser triangulation sensors, are fixed to a moving portion of the robot and detect stationary provided markers (see, for example, WO 99/12082 A1). However, the time required for a precise installation of the marker is relatively long and requires additional equipment, for example, fastening tools and measuring tools that enable a precise position determination of the marker.

It would be preferable to provide a robot cell with an industrial robot, which is capable of improving, in particular facilitating, robot calibration, while enabling the use of low-cost sensors.

According to a first aspect, there is provided a robot cell comprising an industrial robot, a sensor provided on a movable portion of the industrial robot and a marker. The industrial robot is configured to move the movable portion to a calibration position. The sensor is configured to detect the marker, when the movable portion is in the calibration position. The robot cell further comprises at least two connection ports for the marker. The marker is adapted to be connected to either of the connection ports.

The marker may be detachably attached in either of the connection ports. The marker may be slidably insertable in either of the connection ports. This may enable for simple and quick assembly and disassembly.

A number of connection ports n with n ≥ 2, preferably with n ≥ 10, in particular with n ≥ 25 of the robot cell may be greater than a number of markers m with m ≥ 1. The connection ports may be arranged in a distance to a base of the industrial robot of less than 2 metres, preferably 1.5 metres, in particular 1.3 metres. This may enable for a variable assembly and disassembly of the marker. Hence, calibration of the robot can be easily fine-tuned to a certain working area of the robot.

The robot cell may comprise a cabinet, in particular a switch cabinet. The cabinet may serve as a cell housing and includes the connection ports. The cabinet may include two or more coupling means, preferably in form of holes. The coupling means are configured to engage with at least one of: a connector for assembling of two or more cabinets, and a transport ring for transporting the robot cell. The transport ring may be configured to engage with a transporting means such as a crane or vehicle. The transport ring may facilitate transportation of the robot cell.

Alternatively, the robot cell may comprise an ISO container. The ISO container may serve as a cell housing and includes the connection ports. An ISO container may enable the assembly of two or more ISO containers in a vertical direction.

The vertical direction of the robot cell may be a height direction in an upright orientation of the robot cell. The vertical direction may extend perpendicular to a horizontal plane including a first horizontal direction constituting a width direction and a second horizontal direction constituting a depth direction of the robot cell. The first and second horizontal directions may be perpendicular to each other and may share the same origin with the vertical direction. Any indications herein regarding "upper", "top", "lower", "bottom", "under" and "side" are concerning a vertical direction being the height direction.

The robot cell may comprise a frame. The frame may comprise at least eight carrier bars arranged in form of a cuboid. The connection ports may be arranged on the frame. Arranging the connection ports on the frame may enable the arrangement of the markers vertically displaced to the industrial robot. This may enable the reduction of robot errors on upper parts of the robot cell.

The robot cell may comprise a first mounting plate. The connection ports may be arranged on the first mounting plate. The first mounting plate may be provided on the frame.

In particular, the connection ports are arranged in a distance to each other.

The industrial robot may be mounted on the mounting plate.

The industrial robot may include a robot controller and a manipulator and is programmed to carry out some well-defined work by moving the movable portion of the manipulator along a predetermined operating path.

The robot cell may comprise a second mounting plate, wherein the second mounting plate may form a plane parallel to the first mounting plate. The second mounting plate may be vertically displaced, preferably below the first mounting plate. The displacement of the second mounting plate may enable the arrangement of additional equipment in the robot cell. The additional equipment may comprise power converters to supply power to the industrial robot, one or more controllers to operate and/or calibrate the industrial robot, or a ventilation system. Alternatively, a second industrial robot may be arranged on the second mounting plate. This may enable the space between the first and second mounting plate to be used as an additional production space in the robot cell.

The second mounting plate may constitute a bottom plate of the robot cell.

The connections ports may be holes for receiving a connection portion of the marker. A realization of the at least two connection ports as holes may enable for both a variable and an easy-to-assemble calibration setup.

The connection ports may be provided as rectangular, circular, elongated holes or slots.

The mounting plate may be a perforated plate with the connection ports being formed by a plurality of holes. Alternatively, the mounting plate may be a grid plate with the connection ports being formed by a plurality of holes.

The holes may have a perimeter or diameter that may be slightly smaller than the outer perimeter or outer diameter of the connection portion of the marker. This enables a friction fit connection, and facilitates the arrangement of the marker.

The robot cell may be integrally movable with the industrial robot arranged therein.

The robot cell may comprise a coupling means, preferably a hole, an elongated hole or a transport ring, for transporting the robot cell.

The movable portion may be at least one of a robot end arm and an end effector. The sensor may be at least one of attached to the robot end arm, attached to a flange of the end arm, integrated into a gripper jaw of the end effector, attached to a central portion of the gripper jaw of the end effector, and attached between the tool flange of the gripper jaw and the end effector.

The marker may have a detection portion with a geometry corresponding to a sphere. The sphere may enable to determine a point in space with multiple different orientations of the moving portion of the industrial robot. Hence, robot errors may be minimized.

The marker may have a detection portion with a geometry corresponding to a cylinder. The cylinder enables the industrial robot to be calibrated along an axial axis of the cylinder.

The marker may comprise a marker connection port on the upper end of the marker. A further marker may be adapted to be vertically stackable on the marker via the marker connection port. The marker connection port may receive a connection portion of the further marker.

The industrial robot may be configured to move the movable portion to multiple positions and/or orientations around the marker.

The sensor may be next to the marker in the calibration position.

The sensor may be a contactless sensor, preferably a proximity sensor, in particular an inductive proximity sensor or capacitive proximity sensor, or a camera, in particular a 3D camera. The proximity sensor may be low-cost and relatively small in size and weight so that they can be attached to the moving portion of the industrial without producing a great loss of performance, even during later working operations.

The sensor may be a camera, in particular a 3D camera. The marker may comprise an optically readable code. The optically readable code may be a QR-code or an Apriltag.

Several markers may be arranged in connection ports provided towards the boundaries of the mounting plate. The arrangement of connection ports on the boundaries of the mounting plate may increase the calibration accuracy of the industrial robot, in particular for the workspace close to the walls of the robot cell, thereby minimizing the risks of a crash.

The robot cell may comprise a measurement means to detect a position of the marker relative to a reference frame defined in the robot cell. The scale may be user-readable and provided on the robot cell, particularly on the first mounting plate and/or on the frame. Alternatively, a camera for automatically detecting the marker relative to the reference frame may be used.

The robot cell may comprise a controller for calibrating the industrial robot based on a position of the marker and the calibration position.

According to a second aspect, there may be provided a robot calibration system comprising the robot cell, and the controller for calibrating the industrial robot based on a position of the marker and the calibration position.

According to a third aspect, there is provided a method for calibrating an industrial robot The method comprises providing a robot cell with an industrial robot arranged therein, wherein a movable portion of the industrial robot is provided with a sensor, arranging a marker in a distance to a boundary of the robot cell, operating the industrial robot to move the movable portion to a calibration position where the sensor is next to the marker, and calibrating the industrial robot based on a position of the marker and the calibration position. Said distance between the marker and a boundary of the robot cell is less than a distance between the marker and a base of the industrial robot.

The arrangement of connection ports on a boundary of the mounting plate may increase calibration accuracy of the industrial robot, in particular for a workspace close to a wall of the robot cell, thereby minimizing risks of a crash.

The distance between the boundary and the base of the industrial robot may be 5 times, preferably 10 times, more preferably 15 times smaller than the distance between the marker and the base of the industrial robot.

The method for calibrating an industrial robot may further comprise arranging a further marker next to the base of the industrial robot, preferably at a distance to the base of the industrial robot that may be larger than the distance between the boundary and the base of the industrial robot. Arranging the further marker in an area around the base may enable a more accurate calibration around a main working space of the robot, which may be defined around the base rather than on the boundaries.

The robot cell may be provided with a mounting plate that supports the industrial robot and may comprise one or more connection ports for the marker. The number of connection ports n with n ≥ 2, preferably with n ≥ 10, in particular with n ≥ 25 may be greater than a number of markers m with m ≥ 1.

The step of arranging the marker to the robot cell may comprise passing a connection portion of the marker through one of at least two holes of the mounting plate.

The method for calibrating an industrial robot may further comprise the method step of receiving, from a storage, a position of the marker relative to a reference frame defined by the robot cell and a geometry of the marker. Alternatively, the position may be received via user input.

The step of operating the industrial robot may comprise manually operating the industrial robot to detect the marker.

Alternatively or additionally, the step of operating the industrial robot may comprise automatically operating the industrial robot to detect the marker from multiple, between 10 to 30, preferably 20, poses. Each of these poses may define a position and an orientation of the moving portion of the industrial robot.

The automatic operation may be performed after the industrial robot may be initially calibrated using the manual operation so that any drift caused by changes in kinematics may be compensated.

The method step of operating the industrial robot may comprise storing the position of the robot as the calibration position when the marker may be detected.

The method step of calibrating the industrial robot may comprise correcting robot parameters by solving an equation system based on the position of the robot next to the marker, the actual position and the geometry of the marker.

The equation system may be overdetermined.

The overdetermined equation system may be solved by means of an interpolation algorithm, such as a least mean squares method.

According to a fourth aspect, there is provided a use of at least two connection ports for a marker in a robot cell to facilitate robot calibration.

Examples will now be further described with reference to the figures.
Figure 1 illustrates a schematic perspective view of a robot cell according to an embodiment of the present invention.
Figure 2 illustrates a schematic perspective view of a mounting plate, which may be used in a first embodiment of the robot cell according to Fig. 1.
Figure 3 illustrates a schematic perspective view of a marker used in a second embodiment of the robot cell according to Fig. 1.
Figure 4 illustrates a schematic perspective view of a marker used in a third embodiment of the robot cell according to Fig. 1.
Figure 5 illustrates a schematic perspective view of a marker used in a fourth embodiment of the robot cell according to Fig. 1.

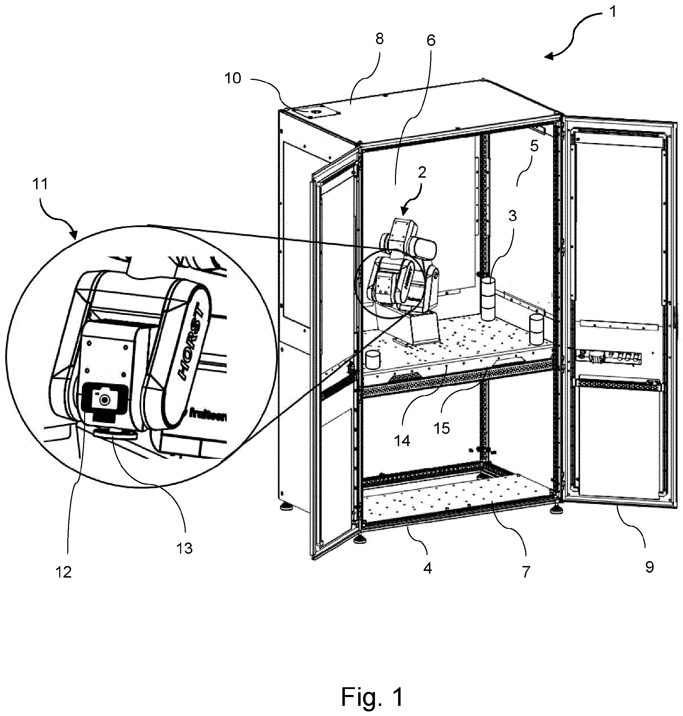

Figure 1 schematically shows an embodiment of a robot cell 1. The robot cell 1 comprises an industrial robot 2 and a plurality of markers 3 for calibrating the industrial robot 2.

The robot cell 1 comprises a cell housing with a frame 4 and a plurality of covers supported by the frame 4. The frame 4 comprises at least twelve carrier bars interconnected in form of a cuboid. The plurality of covers comprises two side walls 5, one back wall 6, a bottom plate 7, a lid 8, and one or more doors 9, such as a wing door. According to the present embodiment, the cell housing is a switching cabinet. In alternative embodiments, the cell housing is an ISO container.

The frame 4 and/or the lid is provided with a coupling means 10 for transporting the robot cell 1.

The industrial robot 2 comprises a robot controller and a manipulator. The manipulator comprises a base and a movable portion 11. According to the present embodiment, the industrial robot 2 is programmed to move the movable portion 11 to a calibration position next to one or more of the plurality of markers 3. The industrial robot 2 may also be manually movable via a user interface.

As further shown in Fig. 1, a sensor 12 is provided on the movable portion 11. In the present embodiment, the movable portion 11 is the end arm of the industrial robot 2. In alternative embodiments, the sensor 12 is provided on an end effector. Said end effector may be attached to a flange 13 of the industrial robot 2. The sensor 12 is a proximity sensor, such as a camera, in particular a 3D camera, an inductive proximity sensor, or a capacitive proximity sensor. The sensor 12 is configured to detect a marker 3, when the movable portion is next to the marker 3.

The industrial robot 2 and the plurality of markers 3 are arranged inside the cell housing. The plurality of markers 3 are connected to connection ports 14. The connection ports 14 are provided on a mounting plate 15 and/or on the frame 4.

The mounting plate 15 is mounted to the frame 4, for example, via screws. The mounting plate 15 is displaced vertically relative to the base plate 7, preferably upwards.

As further shown in Fig. 1, a number of connection ports 14 within the robot cell 1 is greater than a number of markers 3. This enables the markers 3 to be easily arranged on multiple positions in the robot cell 1. Since the markers 3 can be variably connected to each of the connection ports 14, calibration of the industrial robot 2 is refined to an area where the intensity of the markers 3 is high. Said area may correspond to a main working area of the industrial robot 2, where high accuracy is required.

In the present embodiment, the mounting plate 15 is a perforated plate with the connection ports 14 being formed as holes. Alternatively, the mounting plate 15 may be a grid consisting of interconnected cross and side bars.

As shown in Figure 1, the bottom plate 7 may itself constitute a mounting plate similar to mounting plate 15 with a plurality of connection ports 14.

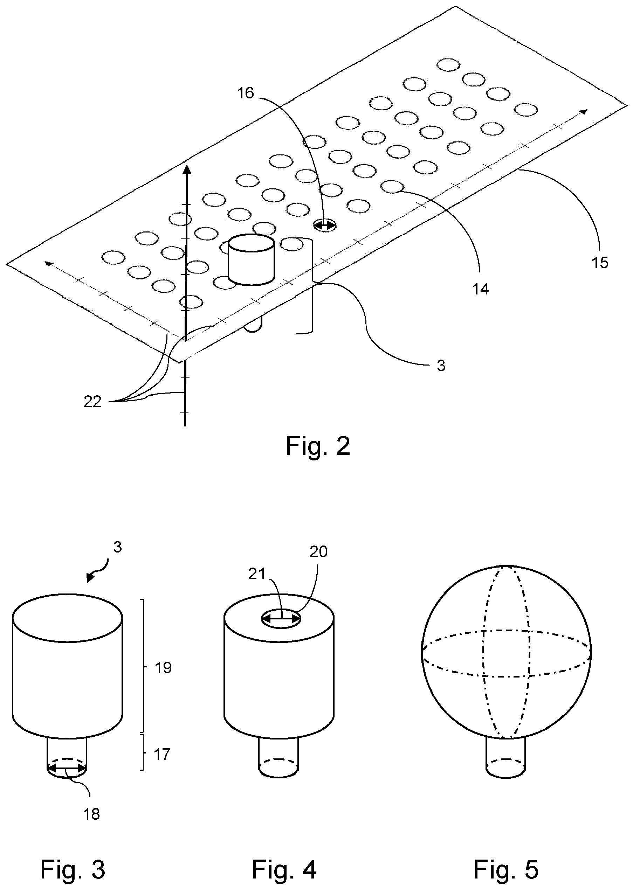

Figure 2 shows a perspective view of a mounting plate 15, which may be used in the robot cell 1 according to Figure 1 in large scale. As shown in Figure 2, the connection ports 15 are holes. The holes may be boreholes. Preferably, the number of holes is greater than or equal to 10, more preferably greater than or equal to 25, in particular greater than or equal to 50.

The holes have a diameter 16 for receiving a connection portion 17 of the marker 3. A diameter 18 of the connection portion 17 is slightly larger than the diameter 16 of the mounting plate 15 to enable easy attachment of the marker 3 by friction fitting.

Referring to Figures 3 to 5, it is shown that a marker 3 comprises a detection portion 19. The detection portion 19 may have a shape similar to a cylinder (Figure 3) or to a sphere (Figure 5). In yet another embodiment as shown in Figure 4, the detection portion 19 has a cylindrical shape, and further has a marker connection port 20 on its upper end for receiving a connection portion 18 of a further marker 3. This enables stacking of the markers 3, as shown in Figure 1.

Preferably, the marker connection port 20 has a diameter 21, which is equal to the diameter 15 of the connection ports 14. In other words, the marker connection port 20 corresponds to a connection port 14.

Referring back to Figure 2, as illustratively shown, the robot cell 1 comprises a measurement means 22, in particular a user-readable scale, to detect a position of a marker 3 relative to a reference frame defined by in the robot cell 1. The user-readable scale is provided, for example, printed, on the mounting plate 15. This enables a user to easily obtain an actual, horizontal XY-position of a marker 3 with respect to the reference frame. Additionally or alternatively, the user-readable scale is provided on a vertical bar of the frame. This enables a user to easily obtain an actual, horizontal Z-position of a marker 3 with respect to the reference frame.

## Claims

1. A robot cell (1) comprising
an industrial robot (2),
a sensor (12) provided on a movable portion (11) of the industrial robot (2),
a marker (3),
wherein the industrial robot (2) is configured to move the movable portion (11) to a calibration position,
wherein the sensor (2) is configured to detect the marker (3), when the movable portion (11) is in the calibration position,
wherein the robot cell (1) further comprises at least two connection ports (14) for the marker (3), wherein the marker (3) is adapted to be connected to either of the connection ports (14).

2. Robot cell (1) according to the preceding claim, wherein the marker (3) is detachably attached to one of the connection ports (14), and wherein a number of connection ports (14) n with n ≥ 2, preferably with n ≥ 10, in particular with n ≥ 25, is greater than a number of markers (3) m with m ≥ 1.

3. Robot cell (1) according to any one of the preceding claims, wherein the robot cell (1) further comprises a frame (4), wherein the connection ports (14) are arranged on the frame (4).

4. Robot cell (1) according to any one of the preceding claims, wherein the robot cell (1) further comprises a first mounting plate (15), wherein the connection ports (14) are arranged on the first mounting plate (15).

5. Robot cell (1) according to any one of the preceding claims, wherein the connections ports (14) are holes for receiving a connection portion (17) of the marker (3).

6. Robot according to any one of the preceding claims, wherein the marker (3) has a detection portion (19) with a geometry corresponding to at least one of a sphere or cylinder.

7. Robot cell (1) according to any one of the preceding claims, wherein the marker (3) comprises a marker connection port (20) on the upper end of the marker (3), wherein a further marker (3) is adapted to be vertically stackable on the marker (3) via the marker connection port (20).

8. Robot cell (1) according to any one of the preceding claims, wherein sensor (12) is a contactless sensor, preferably a proximity sensor, in particular an inductive proximity sensor or capacitive proximity sensor, or a camera, in particular a 3D camera.

9. Robot cell (1) according to any one of the preceding claims, wherein the sensor (12) is a camera, in particular a 3D camera, and the marker comprises an optically readable code.

10. Robot cell (1) according to any one of the preceding claims, further comprising a controller for calibrating the industrial robot (2) based on a position of the marker (3) and the calibration position (14).

11. A method for calibrating an industrial robot (2) comprising
providing a robot cell (1) with an industrial robot (2) arranged therein, wherein a movable portion (11) of the industrial robot (2) is provided with a sensor (12),
arranging a marker (3) in a distance to a boundary of the robot cell (1), wherein said distance is less than a distance between the marker (3) and a base of the industrial robot (2),
operating the industrial robot (2) to move the movable portion (11) to a calibration position where the sensor (12) is next to the marker (11),
calibrating the industrial robot (2) based on the a position of the marker (3) and the calibration position.

12. Method for calibrating an industrial robot according to claim 11, wherein the distance between the boundary and the base of the industrial robot is 5 times, preferably 10 times, more preferably 15 times smaller than the distance between the marker (3) and the base of the industrial robot (2).

13. Method for calibrating an industrial robot according to claim 11 or 12, wherein the robot cell (1) is provided with a mounting plate (15) that supports the industrial robot (2) and comprises one or more connection ports (14) for the marker (3).

14. Method of calibrating an industrial robot according to any one of claims 11 to 13, wherein calibrating the industrial robot (2) comprises correcting robot parameters by solving an equation system, preferably an overdetermined equation system, based on the position of the robot (2) next to the marker (3), the actual position and the geometry of the marker (3), preferably by means of an interpolation algorithm, such as a least mean squares method.

15. Use of at least two connection ports (14) for a marker (3) in a robot cell (1) to facilitate robot calibration.
